# EUROPEAN PATENT APPLICATION

(11) **EP 2 469 811 A1**
(43) Date of publication of application: **27.06.2012**
(21) Application number: 12160184.3
(22) Date of filing: 26.01.2009
(51) Int. Cl.: H04M 1/253, H04W 8/20

(54) **Method of recruiting a new subscriber to a communication services provider**

(30) Priority: 27.01.2008 US 20551; 29.05.2008 US 128641; 29.05.2008 US 128638
(62) Divisional of application: 09250195.6
(71) Applicant: SanDisk IL Ltd, Kfar Saba 44425 (IL)
(72) Inventor: Mardiks, Eitan, 43580 Raanana (IL)
(74) Representative: Prock, Thomas

(57) **Abstract**

An identity module (11) includes a memory (16, 18, 20) and a processor (12). In the memory (16, 18, 20) are stored installation code (50) for installing in the memory (16, 18, 20) a provider profile (24, 44, 46) that associates the identity module (11) with a communication services provider and communication code (54) that, in combination with the provider profile (24, 44, 46), supports communication by a host (82) of the identity module (11) using services of the communication services provider. The processor (12) executes the installation code (50) to install the provider profile (24, 44, 46) and then executes the communication code (54) in support of the communication. Preferably, no portion of any such communication suite is stored initially in the identity module (11). The host (82) requests the provider profile (24, 44, 46) from a server (84) that includes a communication interface (86) for communicating with the host (82), a memory (90) wherein is stored code for providing to the host (82) a customization suite that includes substantially all of the provider profile (24, 44, 46), and a processor (88) for executing the code. To recruit a new subscriber to a communication services provider, when a request is received, from a host (82) of an identity module (11) that lacks any portion of a provider profile (24, 44, 46) that associates the identity module (11) with a communication services provider, to provide a customization suite for installing substantially all of the provider profile (24, 44, 46) in the identity module (11), terms of usage are proposed to the host (82). If the host (82) consents to the terms of usage, the customization suite is sent to the host (82).

## Description

### FIELD OF THE INVENTION

Various embodiments are related to a generic identity module that can be personalized after delivery to a user of a mobile telecommunications device in the course of subscribing to a provider of telecommunications services.

### BACKGROUND

A mobile telecommunications device such as a cellular telephone generally has installed within it an identity module that identifies the user to the provider of telecommunications services to which the user of the device has subscribed. Different telecommunications standards have different names for such an identity module, including: Subscriber Identity Module (SIM) in the GSM standard, Universal Integrated Circuit Card (DICC) in the UMTS standard, and Removable User Identity Module (RUIM) in the CDMA standard. The identity module has stored securely therein one or more digital strings that identify the device in which the identity module is installed with a subscriber of the telecommunications services' provider. In the case of a SIM card, these strings include a unique International Mobile Subscriber Identity (IMSI) and one or more 128-bit authentication keys (Ki).

Identity modules generally, and in particular the "generic" identity module disclosed herein; are discussed herein in terms of SIMs according to the GSM standard. However, it will be clear to those skilled in the art how to apply the principles disclosed herein to identity modules of other telecommunication standards.

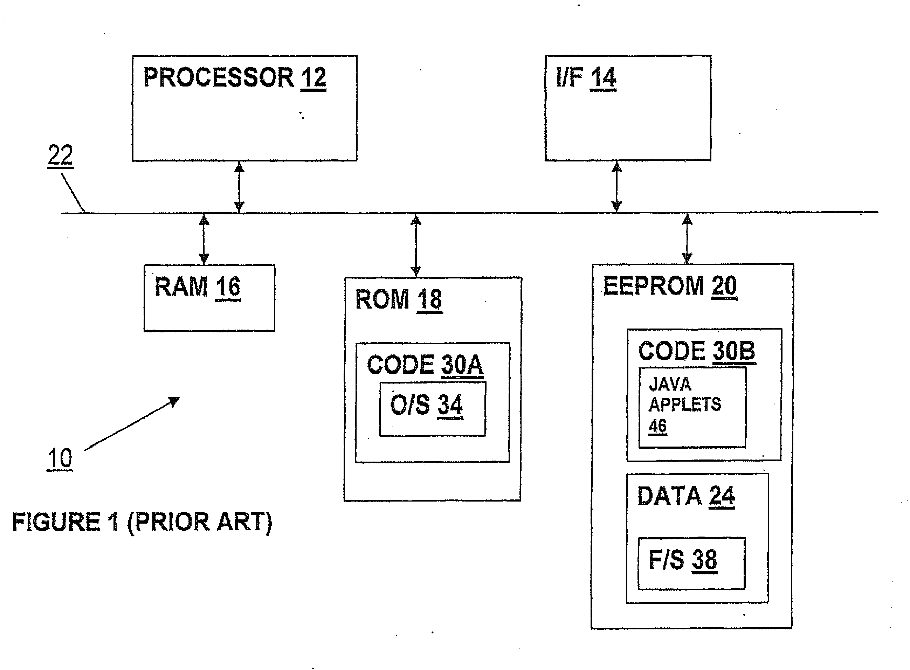

Figure 1 is a high level block diagram of a conventional SIM **10.** SIM **10** includes a processor **12,** an external interface **14,** and three memories: RAM **16,** ROM **18** and EEPROM **20,** all communicating with each other via a bus **22.** RAM **16** is used by processor **12** as a working memory, for execution of code **30** stored in ROM **18** and EEPROM **20.** Data **24,** such as a SIM file system **38,** as well as an IMSI and one or more Ki's, that personalize SIM **10** and associate SIM **10** with a provider of telecommuncation services, are stored in EEPROM **20.**

Figure 1 is a block diagram of a legacy SIM **10.** High-capacity SIMs **10** have two interfaces **14,** one for SIM functionality and the other for storage access.

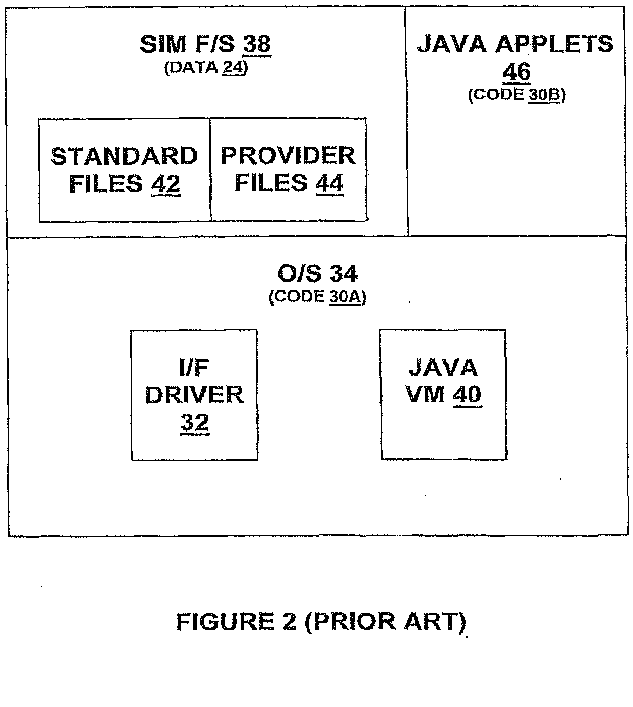

Figure 2 shows the hierarchical architecture of code **30** and its relationship to data **24.** The lower layer of code **30** is an operating system **34** that includes a driver **32** of interface **14.** (Operating system **34** of a high capacity SIM **10** would have two such drivers **32** for its two interfaces **14.)** Optionally, operating system **34** also includes a JAVA virtual machine **40.** Operating system **34** includes, *inter alia,* communications code that is executed by processor **12** in support of communication between the mobile telecommunications device, wherein SIM **10** is installed, and the telecommuncations network of the provider that SIM **10** associates with the mobile telecommunications device. Above operating system **34** are SIM file system **38** and provider-specific JAVA applets **46.** SIM file system **38** includes standard files **42** that are defined by the GSM standard and provider-defined files **44** that are specific to the provider. Some of standard files **42** and provider-defined files **44** are an electrical profile of SIM **10.** Figure 1 shows that code **30** is distributed between code portion **30A** in ROM **18** and code portion **30B** in EEPROM **20.** JAVA applets **46** are considered herein to be a part of code **30** and are stored in EEPROM **20.** The remaing part of code 30 is stored in ROM **18.** File system **38** is stored in EEPROM **20.**

A SIM manufacturer contracting with a telecommunications service provider to provide devices such as SIM **10,** installs all of code **30** and data **24** in **SIM 10.** Each such SIM **10** has unique data **24** (*e.g.* a unique IMSI and one or more unique Ki's) that, after the telecommunications services provider provides the SIM **10** to a subscriber, identifies the telecommunications device in which that SIM **10** is installed as belonging to that subscriber.

Initially, before being associated with a specific telecommunications services provider, each SIM **10** is generic. It would be highly advantageous to be able to sell such generic SIMs directly to users, and have the SIMs be personalized for the users as part of the procedure by which the users subscribe to their selected telecommunications services providers. Such generic SIMs could be sold by vendors who are not associated with specific telecommunications providers.

### SUMMARY OF THE INVENTION

Herein is presented an identity module including: (a) a memory wherein is stored: (i) executable installation code for installing, in the memory, a provider profile that associates the identity module with a communication services provider, and (ii) executable communication code that, in combination with the provider profile, supports communication, by a host to which the identity module is operationally coupled, using communication services provided by the communication services provider; and (b) a processor for executing the executable installation code to install the provider profile in the memory and for then executing the executable communication code for communication using the communication services provided by the communication services provider.

Herein is presented a server including: (a) a communication interface for communicating with a host that is operationally coupled to an identity module that, when provided with a provider profile that associates the identity module with a communication services provider, supports communication services provided by the communication services provider; (b) a memory wherein is stored executable installation code for providing, to the host, a customization suite that includes substantially all of the provider profile; and (c) a processor for executing the executable installation code.

A basic generic identity module includes a memory bearing executable installation code, executable communication and a processor for executing the executable installation code and the executable communication code. The executable installation code is for installing, in the memory, a provider profile that associates the identity module with a communication services provider. The executable communication code, in combination with the provider profile, supports communication, by a host to which the identity module is operationally coupled, using communication services provided by the communication services provider. The processor is for executing the executable installation code to install the provider profile in the memory and then executing the executable communication code for communication using the communication services provided by the communication services provider. Preferably, no portion of any such provider profile is stored initially in the identity module. Hence, there is nothing stored in the identity module, not even a temporary IMSI, that associates the identity module with a specific communication services provider.

Preferably, the memory also has stored therein executable solicitation code for requesting the provider profile. Most preferably, the executable solicitation code is adapted to be executed by the processor. Also most preferably, the executable solicitation code includes executable code for establishing a secure channel for communicating with a provider of the provider profile.

Preferably, the memory is non-volatile.

Preferably, the executable installation code includes executable code for substituting, for a first provider profile that associates the identity module with a first communication services provider and that is already installed in the memory, a second provider profile that associates the identity module with a second communication services provider. Following the substitution, a host of the identity module communicates using the services of the second communication services provider instead of the services of the first communication services provider. Subsequently, the same executable code may be used to substitute, for the second provider profile, a third provider profile that associates the identity module with a third communication services provider, and so on. Alternatively, the executable installation code includes executable code that installs the second provider profile in the memory in addition to the first provider profile. Following the installation of the second provider profile, a host of the identity module can communicate using the services of either communication services provider.

Preferably, the memory also has installed therein executable deletion code for removing the provider profile from the memory, thereby restoring the identity module to its original condition of not being associated with a specific communication services provider.

A server for personalizing such an identity module includes a communication interface, a memory and a processor. The communication interface is for communicating with a host of the identity module. In the memory is stored executable installation code for providing to the host a customization suite that includes substantially all of the provider profile. The processor is for executing the executable installation code.

Preferably, the communication interface is an interface to a telecommunication network such as a telephony network or an internetwork.

Preferably, the executable installation code of the server is for providing the customization suite to the host contingent on satisfaction of a condition such as validation of credentials, such as a credit card number, of the entity that is requesting the customization suite.

Preferably, the server memory also has stored therein executable solicitation code for establishing a secure channel to the host for providing the customization suite to the host.

Herein is presented a method of doing business, including: (a) configuring an identity module initially without any portion of a provider profile that associates the identity module with a communication services provider, the identity module being for using a host, wherein the identity module is operationally connected, to communicate using communication services provided by the communication services provider with which the identity module is associated by the provider profile; and (b) offering the identity module so configured for sale to a potential subscriber of such a communication services provider.

Another method of doing business includes configuring such an identity module initially without any portion of a provider profile and offering the identity module so configured for sale, directly or indirectly, to a potential subscriber of a communication services provider. This is as opposed to offering the identity module for sale to the communication services provider itself.

Herein is presented a method of recruiting a new subscriber to a communication services provider, including: (a) receiving a request to provide a customization suite for installing substantially all of a provider profile in an identity module in order to associate the identity module with a communication services provider, thereby enabling the identity module to support communication services provided by the communication services provider, the request being received from a host of the identity module, the identity module lacking any portion of the provider profile; (b) responding to the request by proposing to the host terms of usage of the communication services; and (c) upon receiving from the host a consent to the terms of usage, sending the customization suite to the host.

In a method of recruiting a new subscriber to a communication services provider, a request is received to provide a customization suite for installing substantially all of a provider profile in an identity module in order to associate the identity module with the communication services provider. With the provider profile installed therein, the identity module supports communication services provided by the communication services provider. The request is received from a host of the identity module, such as a cellular telephone or a computer equipped with a card reader. When the request is received, no portion of the provider profile is installed in the identity module. Then, the request is responded to by proposing to the host terms of usage of the communication services. Upon receiving consent to the terms of usage from the host, the customization suite is sent to the host.

Preferably, the method also includes establishing a secure channel to the host. The customization suite is sent to the host via the secure channel.

Preferably, the consent includes a credential such as a credit card number. The method includes validating the credential. The sending of the customization suite to the host is conditional on the credential being valid.

Preferably, the receiving of the request, the responding to the request and the sending of the customization suite are via a telecommunication network such as a telephony network or an internetwork.

Herein is presented a method of doing business, including: (a) obtaining an identity module for using a host, wherein the identity module is operationally connected, to communicate using communication services provided by a communication services provider when the identity module has installed therein a provider profile that associates the identity module with the communication services provider, the identity module initially lacking any portion of any such provider profile; and (b) offering the identity module for sale to a potential subscriber of such a communication services provider. The method may also include requesting one such provider profile on behalf of the potential subscriber.

A method of doing business includes obtaining an identity module that initially lacks any portion of any provider profile that associates the identity module with any communication services provider, and offering the identity module for sale to a potential subscriber of one such communication services provider. This is as opposed to offering such an identity module for sale to a communication services provider for personalization by the communication services provider. Preferably, the method also includes requesting a provider profile on behalf of the potential subscriber.

### BRIEF T3ESCRIPTION OF THE DRAWINGS

The generic identity module is herein described, by way of example only, with reference to the accompanying drawings, wherein:
FIG. 1 is a high-level block diagram of a conventional SIM;
FIG. 2 shows the hierarchical architecture of the code of a conventional SIM;
FIG. 3 is a high-level block diagram of an embodiment of a generic, precustomization SIM;
FIGs. 4A and 4C show the hierarchical architectures of the codes and data of two different generic SIMs prior to the installation of provider profiles;
FIG. 4B shows the hierarchical architecture of the code and data of the generic SIM of FIG. 4A after the installation of a provider profile;
FIG. 5 shows the exchange of signals between a generic SIM and a server for requesting a provider profile;
FIG. 6 is a high-level block diagram of a generic SIM in a cellular telephone requesting a provider profile from a server;
FIG. 7 shows the hierarchical architecture of the code and data of a generic SIM after the installation of two provider profiles;
FIG. 8 is a high-level block diagram of a generic SIM coupled by a card reader to a computer requesting a provider profile from a server.

### DESCRIPTION OF THE PREFERRED EMBODIMENTS

The principles and operation of a generic identity module may be better understood with reference to the drawings and the accompanying description.

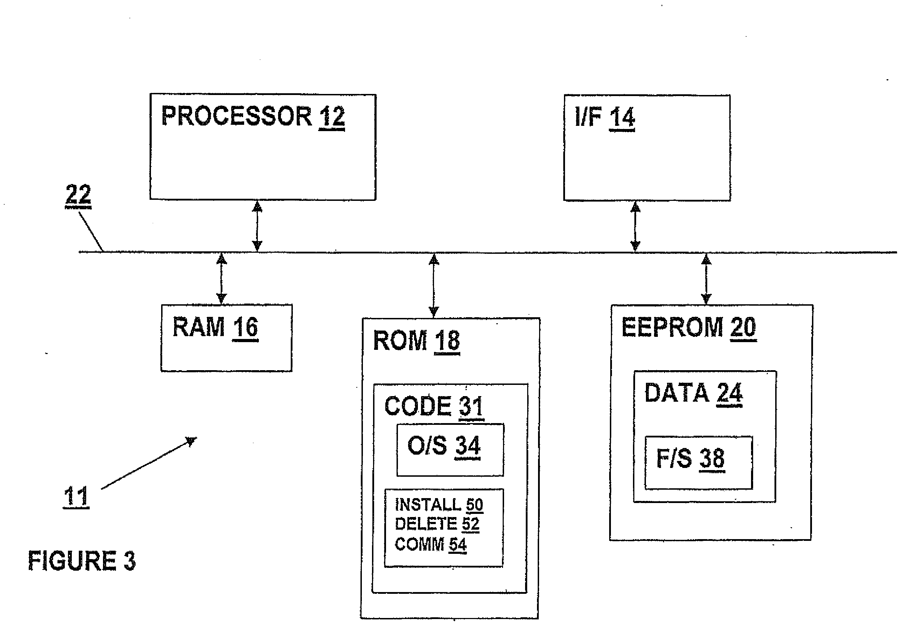

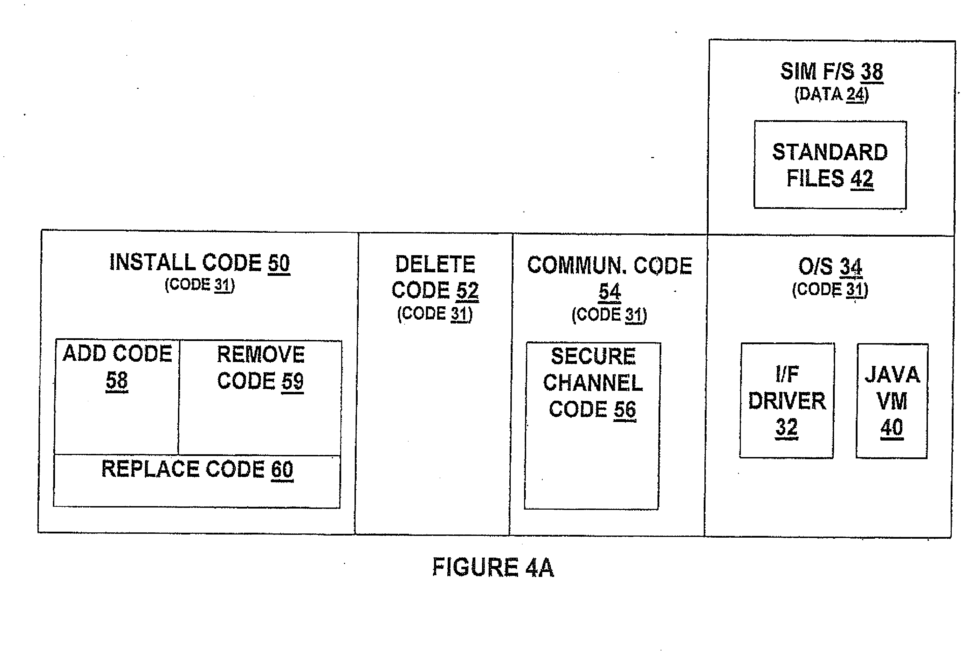

Referring again to the drawings, Figure 3 illustrates a generic SIM **11** that can be personalized at will for a user. SIM **11** is identical to SIM **10,** except that code **30** is replaced with modified code **31.** Figure 4A shows the hierarchical architecture of code **31** of an exemplary embodiment of such a generic SIM and its relation to data **24.**

Like code **30** and data **24** of Figure 2, code **31** and data **24** of Figure 4A includes an operating system **34** with a driver **32** of interface **14** and a JAVA virtual machine **40,** and a SIM file system **38** with standard files **42** but does not include either provider-defined SIM files **44** or any JAVA applets **46.** Instead, code **31** of Figure 4A includes installation code **50** for installing, in EEPROM **20** of SIM **11,** the portion of code **30** and data **24** of Figure 2 (provider-defined files **44** and JAVA applets **46)** that associates conventional SIM 10 with a specific telecommunications services provider, and also for installing, in EEPROM **20** of SIM **11,** data **24** that personalize SIM **11** for a specific subscriber of the telecommunications services provider. Installation code **50** is functionally equivalent to the code that a manufacturer of SIM **10** uses to install provider-defined files **44,** JAVA applets **40** and the rest of data **24** in SIM **10.**

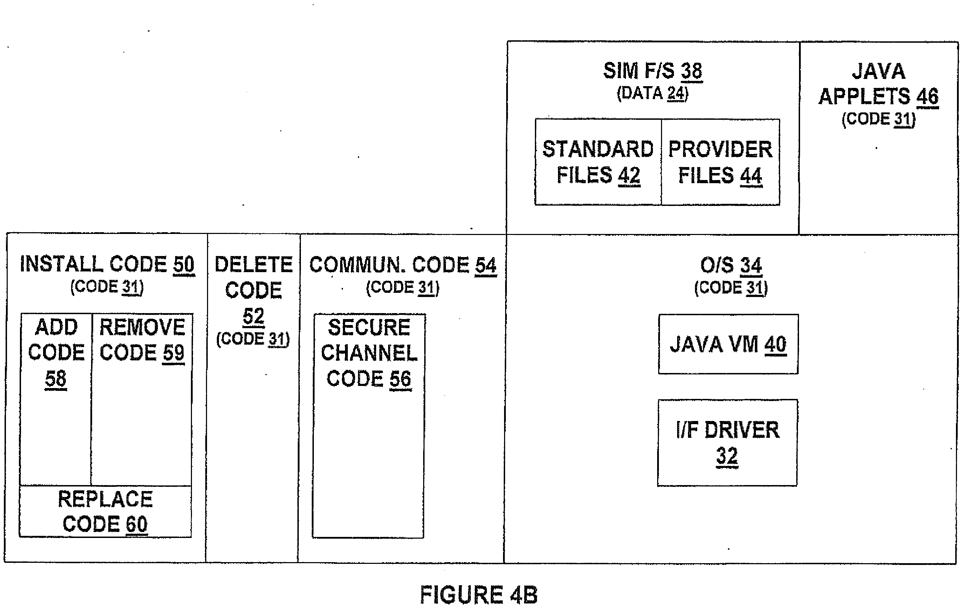

After processor **12** has executed installation code **50,** the hierarchical architecture of code **31** and its relation to data **24** is as illustrated in Figure 4B. Hence, provider-defined portion **44,** JAVA applets **46** and the related data **24** are referred to collectively herein as a "provider profile" that associates SIM 11 with a specific subscriber of a specific telecommunications services provider.

In order to obtain the provider profile for installation, SIM **11** also includes communication code **54** that is executed by processor **12** and by a host such as a cellular telephone. While SIM **11** is installed in the host, the host executes the relevant portion of communication code **54** along with its own code to follow a data communication protocol such as GPRS to communicate with a server that is associated with the telecommunications services provider and request the provider profile.

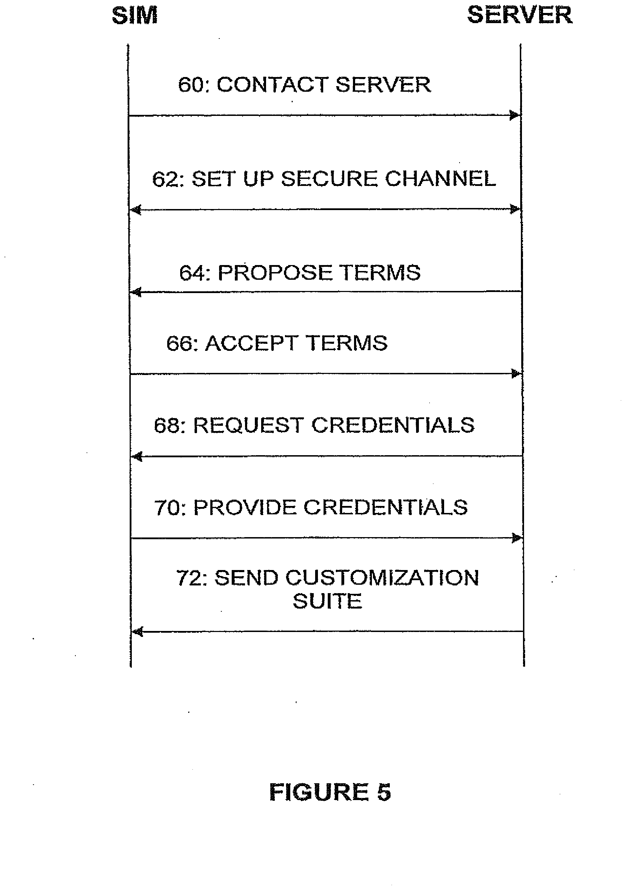

Figure 5 shows the exchange of signals between SIM 11 and a server for requesting a provider profile. In step **60,** the user uses the cellular telephone in which SIM **10** is installed to initiate communication with the server. In step **62,** SIM **11** and the server set up a secure channel for uploading user credentials to the server and downloading the provider profile to SIM **11,** using methods known in the art that need not be detailed here. For that purpose, communication code **54** includes code **56** for setting up the secure channel. In step **64,** the server proposes terms of usage to SIM **11.** If the user decides to accept the proposed terms of usage, in step **66** the user uses the cellular telephone in which SIM **11** is installed to send a message to the server indicating acceptance of the terms of usage. In step **68,** the server requests user credentials, such as a mailing address and a credit card number, for registering the user as a subscriber to the telecommunications services provider with which the server is associated. In step **70,** the user uses the cellular telephone in which SIM **11** is installed to send the requested credentials to the server. In step **72,** having authenticated the user credentials, the server sends a "customization suite" to SIM **11.** The customization suite includes the provider-specific data (both data generic to the provider and data such as an IMSI and one or more authentication keys that are specific to SIM **11)** that SIM **11** needs for executing installation code **50** to install the provider profile. Optionally, the customization suite also includes provider-specific instructions (*e.g.* in the form of a script) that supplement installation code **50.** Processor **12** executes communication code **54** to effect the SIM-11-side portion of the provider profile request.

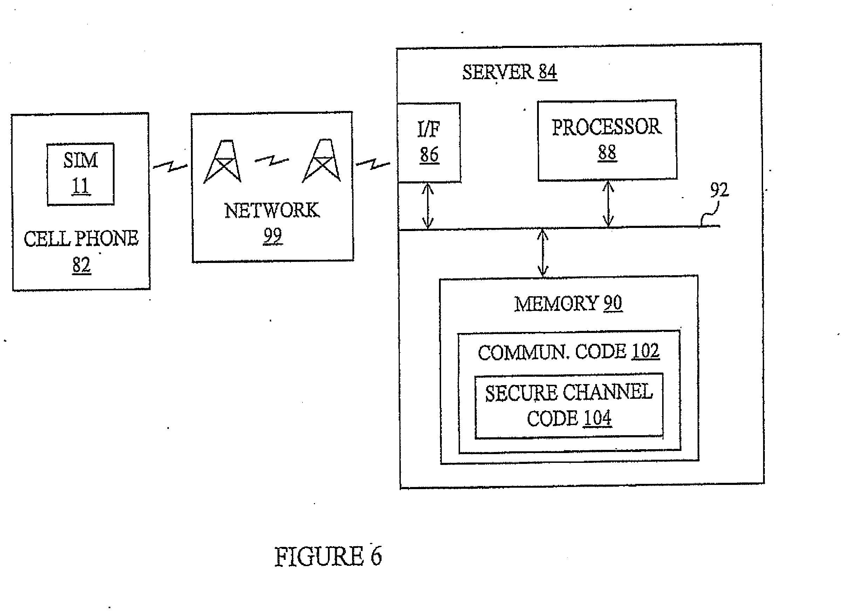

Figure 6 shows SIM **11,** installed in a cellular telephone **82,** communicating with a server **84** via a cellular telephony network **94** to effect the steps illustrated in Figure 5. Server **84** includes, among other components, an interface **86** to network **94,** a memory **90** wherein is stored code **102** for implementing the server-side steps of Figure 5, and a processor **88** for executing code **102.** Interface **86,** memory **90** and processor **88** communicate with each other via a bus **92.** Code **102** includes, *inter alia,* secure channel code **104** that is similar to secure channel code **56.**

Figures 4A and 4B also show code **31** of a generic SIM **10** as including deletion code **52** and as including, in installation code **50:** a module **58** for adding to SIM **11** a second provider profile of a second telecommunications services provider (in addition to a first provider profile of a first telecommunications services provider that is already installed in SIM **11);** a module **59** for deleting a provider profile from SIM 11; and a module **60** for substituting in SIM **11** a second provider profile of a second telecommunications services provider for a first provider profile of a first telecommunications services provider (that is already installed in SIM **11).**

In some embodiments of a generic SIM **11,** modules **58, 59** and **60** may be absent and deletion code **52** may be executed automatically, upon the successful completion of personalization of SIM **11,** to delete installation code **50,** communication code **54** and deletion code **52** itself. Subsequent to such deletion, the hierarchical structure of code **31** then is the same as that of code **30** of the prior art, as illustrated in Figure 2. In other embodiments of a generic **SIM 11,** the execution of deletion code **52** may be optional.

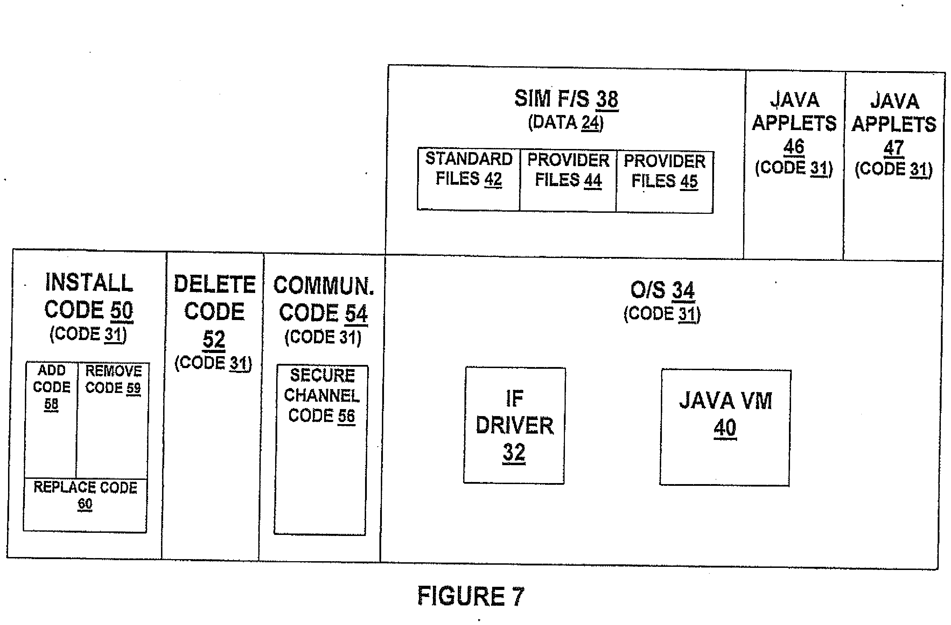

Module **58** gives the user the option of subscribing to two or more different telecommunications services providers at the same time. Executing module **58** effects the steps illustrated in Figure 5 to add a second provider profile to SIM **11.** The hierarchical architecture of code **31** after such an addition is illustrated in Figure **7****.** In addition to files **44** and JAVA applets **46** that are specific to the first telecommunications provider, code **31** and data **24** now include files **45** and JAVA applets **47** of the second telecommunications provider. Module **59** gives the user the option of deleting any or all of the installed provider profiles from SIM 11. Module **60** gives the user the option of substituting the provider profile of a second telecommunications provider for the provider profile of a first telecommunications provider. Executing module **60** executes module **59** to delete an installed provider profile and then effects the steps illustrated in Figure 5 to install the new provider profile.

Server **84** of Figure 6 may be owned either by the manufacturer of generic SIM cards 11 or by a telecommunications services provider. If server **84** is owned by the manufacturer of generic SIM cards **11** then server **84** provides subscription services for telecommunications services providers that have made the appropriate arrangements with the manufacturer of generic SIM cards **11.** In step **60** of Figure 5, in addition to calling server **84,** the user also specifies which telecommunications services provider the user wishes to subscribe to. In step **72** of Figure 5, in addition to sending the user the provider profile, server **84** also sends the user's credentials to the selected telecommunications services provider, via cellular telephony network **94.** If server **84** is owned by a telecommunications services provider, for example if the manufacturer of generic SIM cards **11** has sold server **84** to the telecommunications services provider, then in step **70** of Figure 5, upon receiving the user's credentials, the telecommunication services provider sets up an account for the user.

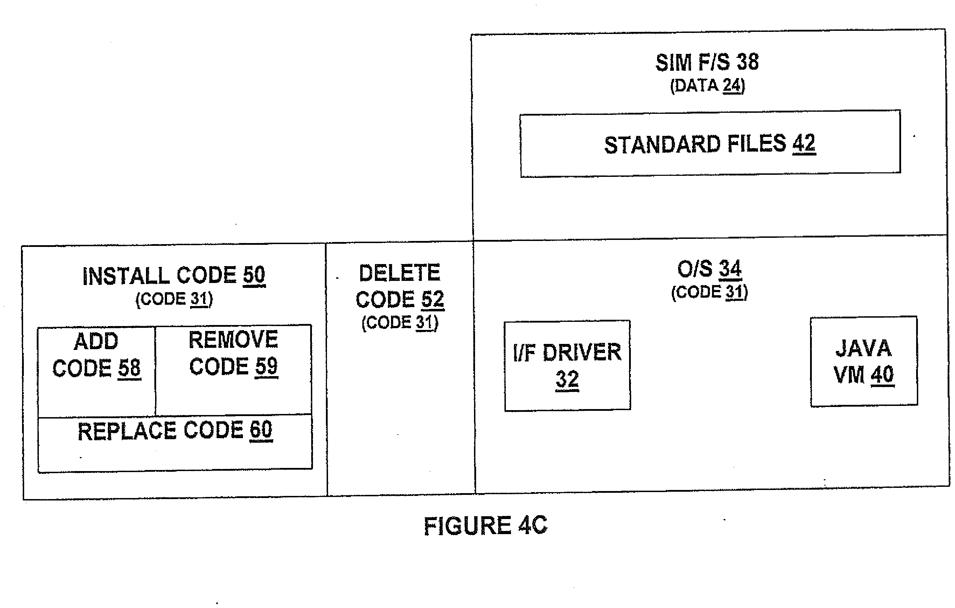

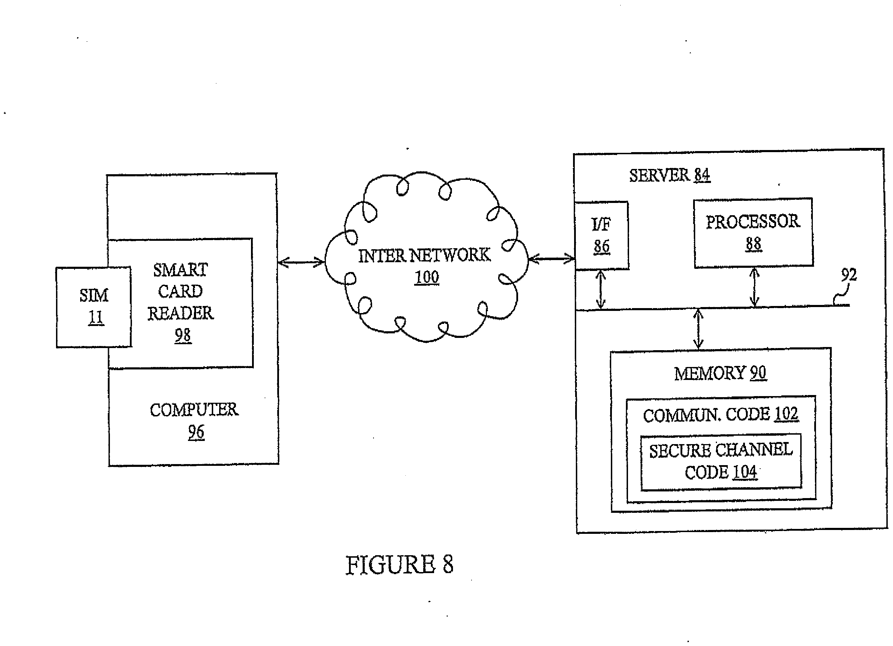

Figure 8 shows an alternative mechanism for establishing communication between SIM **11** and server **84.** In Figure **8****,** the host of SIM **11** is a computer **96** equipped with a smart card reader **98** to which SIM **11** is operationally coupled via its interface **14.** Computer **96** communicates with server **84** via an internetwork 100 such as the Internet. Computer **96** would be used, for example, by a retail vendor of generic smart cards **11** who offers generic smart cards **11** for sale to users and who personalizes generic smart cards **11** for users who purchase generic smart cards **11.** The manufacturer of generic smart cards **11,** in turn offers generic smart cards **11** for sale to such retail vendors, instead of or in addition to offering conventional SIMs **10** for sale to telecommunications services providers. Optionally, code **54** for communicating with server **84** resides in computer **96** rather than in generic smart cards **11;** the corresponding hierarchical architecture of code **31** of such a generic smart cards **11** is shown in Figure 4C.

Yet another mechanism (not illustrated) for establishing communication between SIM **11** and server **84** may be a blend of the two mechanisms illustrated in Figures **6** and **8****.** In this mechanism, cell phone **82** communicates with server **84** via computer **96,** using e.g. USB to communicate with computer **96.**

While the invention has been described with respect to a limited number of embodiments, it will be appreciated that many variations, modifications and other applications of the invention may be made. Therefore, the claimed invention as recited in the claims that follow is not limited to the embodiments described herein.

Further embodiments of the invention are set out in the following clauses:
1. An identity module comprising:
   (a) a memory wherein is stored:
      (i) executable installation code for installing, in the memory, a provider profile that associates the identity module with a communication services provider, and
      (ii) executable communication code that, in combination with the provider profile, supports communication, by a host to which the identity module is operationally coupled, using communication services provided by the communication services provider; and
   (b) a processor for executing the executable installation code to install the provider profile in the memory and for then executing the executable communication code for communication using the communication services provided by the communication services provider.
2. The identity module of clause 1, wherein no portion of any such provider profile is stored initially in the identity module.
3. The identity module of clause 1 or 2, wherein the memory also has stored therein executable solicitation code for requesting the provider profile, wherein the executable solicitation code is adapted to be executed by the processor.
4. The identity module of clause 3, wherein said executable solicitation code includes executable code for establishing a secure channel for communicating with a provider of the provider profile.
5. The identity module of any one preceding clause, wherein the executable installation code includes executable code for substituting, for a first provider profile that associates the identity module with a first communication services provider and that is already installed in the memory, a second provider profile that associates the identity module with a second communication services provider.
6. The identity module of any one of clauses 1 to 5, wherein the executable installation code includes executable code for installing in the memory, in addition to a first provider profile that associates the identity module with a first communication services provider and that is already installed in the memory, a second provider profile that associates the identity module with a second communication services provider.
7. The identity module of any one preceding clause, wherein the memory also has stored therein:
   (iii) executable deletion code for removing the provider profile from the memory.
8. A server comprising: (a) a communication interface for communicating with a host that is operationally coupled to an identity module that, when provided with a provider profile that associates the identity module with a communication services provider, supports communication services provided by the communication services provider;
   (b) a memory wherein is stored executable installation code for providing, to the host, a customization suite that includes substantially all of the provider profile; and
   (c) a processor for executing the executable installation code.
9. The server of clause 8, wherein the communication interface is an interface to a cellular telephony network or an internet network.
10. The server of clause 8 or 9, wherein the executable installation code is for providing the communication suite to the host contingent on satisfaction of a condition.
11. The server of clause 10, wherein the condition is validation of credentials of an entity requesting the customization suite.
12. The server of any one of clauses 8 to 11, wherein the memory also has stored therein executable solicitation code for establishing a secure channel to the host for providing the customization suite to the host.
13. A method of doing business, comprising: (a) configuring an identity module initially without any portion of a provider profile that associates the identity module with a communication services provider, the identity module being for using a host, wherein the identity module is operationally connected, to communicate using communication services provided by the communication services provider with which the identity module is associated by the provider profile; and
   (b) offering the identity module so configured for sale to a potential subscriber of such a communication services provider.
14. A method of recruiting a new subscriber to a communication services provider, comprising:
   (a) receiving a request to provide a customization suite for installing substantially all of a provider profile in an identity module in order to associate the identity module with a communication services provider, thereby enabling the identity module to support communication services provided by the communication services provider, the request being received from a host of the identity module, the identity module lacking any portion of the provider profile;
   (b) responding to the request by proposing to the host terms of usage of the communication services; and
   (c) upon receiving from the host a consent to the terms of usage, sending the customization suite to the host.
15. The method of clause 14, further comprising: (d) establishing a secure channel to the host, the sending of the customization suite to the host then being via the secure channel.
16. The method of clause 14 or 15, wherein the consent includes a credential, the method further comprising:
   (d) validating the credential, the sending of the customization suite to the host being conditional on a validity of the credential.
17. The method of clause 14, 15, or 16, wherein the receiving, responding and sending are via a cellular telephony network or an internet network.
18. A method of doing business, comprising:
   (a) obtaining an identity module for using a host, wherein the identity module is operationally connected, to communicate using communication services provided by a communication services provider when the identity module has installed therein a provider profile that associates the identity module with the communication services provider, the identity module initially lacking any portion of any such provider profile;
   (b) offering the identity module for sale to a potential subscriber of such a communication services provider; and
   (c) requesting, on behalf of the potential subscriber, one such provider profile.

## Claims

1. A server comprising:
a communication interface (86) operative to:
communicate with an identity module (11) that, when provided with a provider profile (24, 44, 46) that associates the identity module (11) with a communication services provider, supports communication services provided by the communication services provider, wherein prior to installation of the provider profile (24, 44, 46) the identity module (11) is devoid of identification information associating the identity module (11) with the communication services provider;
communicate terms of usage to a host (82) that is associated with the identity module (11), receive acceptance of the terms of usage from the host (82), and receive a payment credential prior to providing the provider profile (24, 44, 46); and
communicate a customization suite that includes the provider profile to the identity module via a telecommunications network; and
a memory (90) storing executable installation code to associated with the customization suite.

2. The server of claim 1, wherein the communication interface (86) is an interface to a cellular telephony network (99).

3. The server of claim 1 or 2, wherein the executable installation code is to provide the customization suite to the identity module (11) contingent upon satisfaction of a condition.

4. The server of claim 3, wherein the condition includes validation of the payment credential.

5. The server of claim 4, wherein the server is to validate the payment credential prior to providing the provider profile (24, 44, 46).

6. The server of any one of claims 1 to 5, wherein the memory (90) further stores solicitation code (104) to establish a secure channel to provide the customization suite.

7. The server of any one of claims 1 to 6, wherein the communication interface (86) comprises an interface to a data communication network (99, 100).

8. A method of recruiting a new subscriber to a communication services provider, the method comprising:
receiving a request to provide a customization suite including a provider profile (24, 44, 46) to be installed in an identity module (11) that is devoid of any portion of the provider profile (24, 44, 46) prior to installation of the provider profile (24, 44, 46), wherein the provider profile (24, 44, 46) is to associate the identity module (11) with a communication services provider, wherein the request is received from a host (82) of the identity module (11);
communicating to the host (82) terms of usage of the communication services in response to the request; and
upon receiving from the host (82) a consent to the terms of usage, providing the customization suite to the host (82) via a telecommunications network.

9. The method of claim 8, wherein providing the customization suite further comprises sending the customization suite to the host (82) via a secure channel.

10. The method of claim 8 or 9, further comprising receiving a payment credential at the communication services provider.

11. The method of claim 8, 9 or 10, wherein the receiving, communicating, and providing are accomplished via a cellular telephony network (99).

12. The method of claims 8 to 11, wherein the receiving, communicating, and providing are accomplished via an internet network (100).

13. The method of claim 8 to 12, further comprising validating the payment credential prior to providing the customization suite.
